(19) **Europäisches Patentamt / European Patent Office / Office européen des brevets**

(11) **EP 2 114 020 B1**

(12) **EUROPEAN PATENT SPECIFICATION**

(45) Date of publication and mention
of the grant of the patent:
**10.09.2014  Bulletin 2014/37**

(21) Application number: **08773078.4**

(22) Date of filing: **01.07.2008**

(51) Int Cl.:
**H04B 7/005** *(2006.01)*    **H04W 52/24** *(2009.01)*

(86) International application number:
**PCT/CN2008/071517**

(87) International publication number:
**WO 2009/003413 (08.01.2009 Gazette 2009/02)**

(54) **CONTROL METHOD AND SYSTEM FOR UPLINK AND DOWNLINK POWER**

STEUERUNGSVERFAHREN UND ANORDNUNG FÜR STÄRKE EINER AUFWÄRTS UND
ABWÄRTS VERBINDUNG

PROCÉDÉ ET SYSTÈME POUR COMMANDER LA PUISSANCE DE LIAISON MONTANTE ET DE
LIAISON DESCENDANTE

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **04.07.2007  CN 200710043419**

(43) Date of publication of application:
**04.11.2009   Bulletin 2009/45**

(73) Proprietor: **Huawei Technologies Co., Ltd.
Longgang District, Shenzhen
Guangdong 518129 (CN)**

(72) Inventors:
• **CHEN, Xin
Shanghai 200127 (CN)**

• **ZHONG, Huazheng
Shanghai 200127 (CN)**

(74) Representative: **Isarpatent
Patent- und Rechtsanwälte
Postfach 44 01 51
80750 München (DE)**

(56) References cited:
**EP-A2- 0 682 418       EP-A2- 0 893 890
WO-A2-2006/010958    WO-A2-2008/093100
CN-A- 1 126 930         CN-A- 1 466 819
CN-A- 101 079 659**

**Description**

**BACKGROUND OF THE INVENTION**

**Field of the Technology**

The present invention relates to a wireless communication field, and more particularly, to a method and a system for controlling uplink and downlink powers.

**Background of the Invention**

Code division multiple access (CDMA) communication system is important in the mobile communication, particularly in the third generation (3G) mobile communication, and the three relatively mature standards are within the scope of the CDMA. In the CDMA system, all the users have the same frequency, and the interference problem among one another is outstanding, so the power control is quite critical. No matter for the uplink or the downlink, the excessively small power cannot meet the communication quality demand of the user, and the excessive large power may reduce the operating efficiency of the communication system, so it is quite necessary to maintain the transmit power at a minimum power capable of satisfying the communication quality demand.

Two methods for controlling the power exist in the prior art, namely, an open loop power control and a closed loop power control.

The open loop power control is mainly adapted to determine an initial transmit power of the user, or adjust the transmit power when the received signal code power of the user is abruptly changed. The actual interference and the power control effect of the system depend on the closed loop power control, and the closed loop power control further includes an outer loop power control and an inner loop power control.

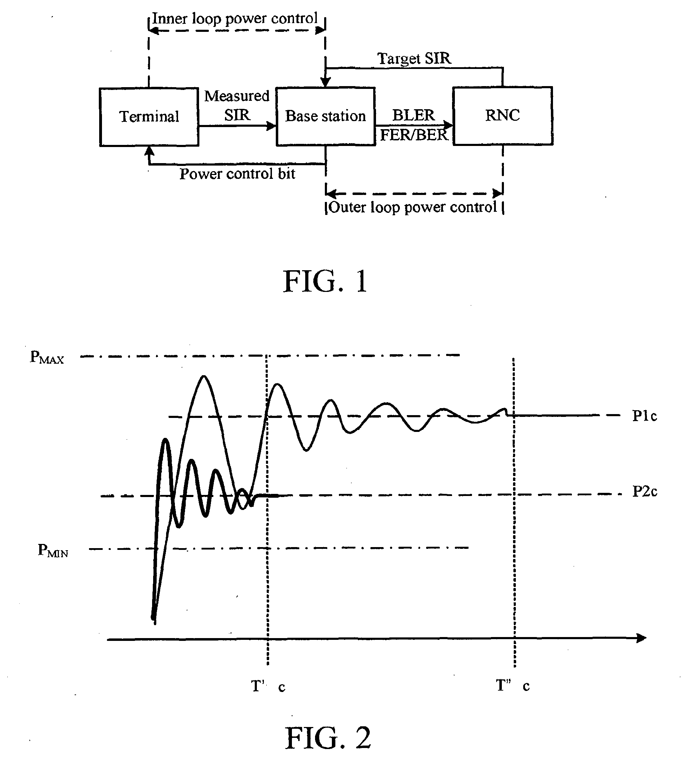

Referring to FIG. 1, the power control mechanism regulated by the 3GPP includes an outer loop power control and an inner loop power control. The target of the "outer loop power control" is to adjust a signal to interference ratio (SIR) in time according to traffic demands, so that various traffics may have the relatively small block error rate (BLER) when achieving the target SIR, thereby ensuring the traffic quality. The target of the "inner loop power control" is to adjust the power in time according to the adjusted target SIR value, so that the SIR is basically constant.

The inner loop power control further includes an uplink power control and a downlink power control. For the uplink power control, a base station detects the SIR of the uplink between the base station and the terminal, so as to obtain an SIR measured value. The base station performs the power control according to the target SIR from a radio network controller (RNC) and a local SIR measured value, and sends inner loop power control commands TPC_CMD to the terminal. TPC_CMD=f{C1,C2,C3,..,Cm} and C1, C2, C3... respectively represent the power control command corresponding to one wireless connection between the terminal and the base station, and the final power control command is a function of the command received by each link. The mechanism of generating each power control command is described as follows.

When the measured SIR is smaller than the target SIR, the inner loop control command is sent to instruct the terminal to increase one step for the uplink transmit power, that is, when the measured SIR<the target SIR, Ci=+1.

When the measured SIR is larger than the target SIR, the inner loop control command is sent to instruct the terminal to decrease one step for the uplink transmit power, that is, when the measured SIR>the target SIR, Ci=-1.

For the downlink power control, the terminal measures the SIR of the downlink, and reports the SIR measured value. The base station performs the power control according to the target SIR from the RNC and the SIR measured value reported by the terminal, and instructs the base station to increase or decrease the downlink transmit power. The detailed determination and the indication principle are similar to those of the uplink power control.

The effect of the power control is that under various traffic conditions, the uplink SIR detected by the base station and the downlink SIR reported by the terminal are converged to the corresponding target SIR.

During the power control process, the change of the transmit power is as shown in FIG. 2. Pmax represents a maximum power allowed by the cell, Pmin represents a minimum power allowed by the cell, P1c represents a transmit power convergence value of the terminal on the edge of the cell, P2c represents the transmit power convergence value of the terminal adjacent to the base station, T'c represents a power convergence time of the terminal adjacent to the base station, and T"c represents the power convergence time of the terminal on the edge of the cell

It may be known that the final transmit power of the terminal on the edge of the cell and the terminal adjacent to the base station may be controlled within the power scope allowed by the cell. In FIG. 2, the power scope allowed by the cell=Pmax-Pmin, and the value is not changed with the position of the terminal, but is determined through parameters in advance.

During the process of realizing the present invention, the inventors find that the prior art at least has the problems as follows.

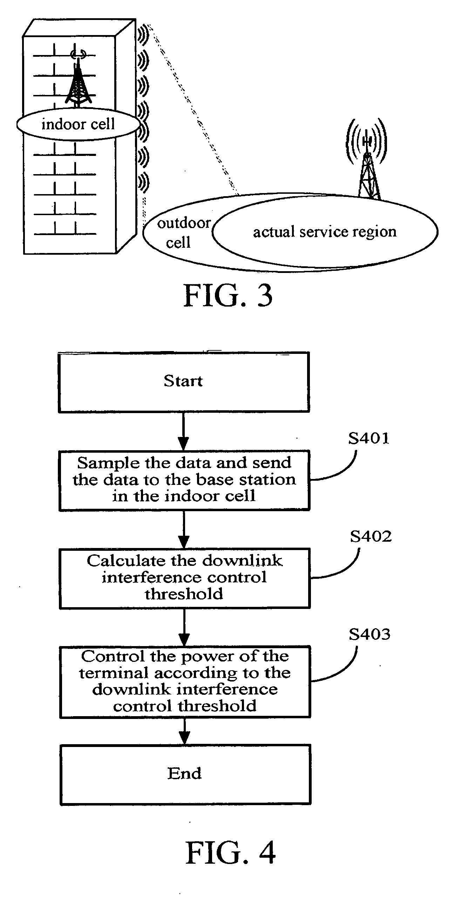

Although the conventional power control algorithm is applicable to the common network situation of 3G, under some special scenes, for example, in a building having an indoor coverage system, the indoor cell interference to the outdoor cell is excessively large, as shown in FIG. 3.

Particularly, the power necessarily has the loss during the transferring process, so that the power convergence values of different terminals are greatly different, the converged transmit power of the terminal on the edge of the cell or in the region with the poor coverage condition after the power control is usually large, such as P1c in FIG. 2, and the converged transmit power of the terminal on the coverage center of the base station or in the region with the good coverage condition after the power control is usually small, such as P2c in FIG. 2. P1c and P2c are all within the power scope allowed by the cell, so P1c and P2c will not be limited in the power control. However, for the indoor cells of a small base station, a distributed antenna system, or access point (AP) set in the building, the edge parts of the cells are adjacent to the outdoor cell, and in the adjacent regions, if the transmit power of the terminal is excessively high, the outdoor cell is interfered. Particularly, under the situation of the high building, the interference to the outdoor network is larger, and the outdoor service cell may be shrunk.

According to the actual wideband code division multiple access (WCDMA) network testing experience, an outdoor scene is selected to test the interference of the indoor coverage signal leakage to the outdoor signal coverage. In the test, the indoor distributed system is installed in an 8-layer equipment room.

In the test example, the outdoor cell is tested under the situations that the indoor pilot power remains unchanged, is increased by 3 dB, and is decreased by 3dB etc., so as to obtain a test data statistic result on the outdoor street. The analysis shows the facts as follows.

1. The indoor cell pilot power has a change of 3 dB, the Ec (the energy received by each chip) of the outdoor cell has the change from 1.2 to 1.7 dB, and the Ec/Io (the ratio of the energy received by each chip to the noise power spectrum density) has the change from 0.3 to 0.5 dB. That is to say, when the indoor cell pilot power is increased by 3 dB, the Ec of the outdoor cell is decreased by 1.2 to 1.7 dB, and Ec/Io is decreased by 0.3 to 0.5 dB.

2. When the indoor coverage cell pilot power has the change of (is increased or decreased by) 3 dB, the change of the soft handover ratio is distinct, the average change of the indoor environment soft handover ratio is 89.2%, and the average change of the outdoor environment soft handover ratio is 45%. It may be known that the increasing of the indoor cell pilot power results in the great increasing of the indoor cell and the outdoor cell soft handovers, thus occupying a great amount of cell resources. During the soft handover process, the phenomenon affecting the user experience, such as the call drop, easily occurs.

3. In the outdoor position being 5 meters (m) away from the indoor, the outdoor cell pilot power Ec average value is 5 dB higher than the pilot power leaked and output from the indoor, and the controllable soft handover ratio is approximately 30%. It may be known that the affecting scope of the indoor cell on the outdoor cell is relatively large.

4. The indoor cell pilot power is 10 dB higher than the outdoor pilot penetrating to the indoor cell, and the controllable soft handover ratio is approximately 30%.

It may be known from the test example that the higher the building having the indoor distributed system is, the denser the buildings are, the larger the indoor interference to the outdoor.

EP 0682418 A2 discloses a transmission power control method for mobile radio. The method comprises, calculating an actual SIR of a desired signal; deciding whether the actual SIR is greater than a predetermined communication quality; forming a transmission power control bit on the basis of a result of deciding; calculating tentative reverse transmission power in accordance with the transmission power control bit; deciding reverse transmission power such that the reverse transmission power is made equal to the tentative reverse transmission power when tentative reverse transmission power is less than a predetermined maximum transmission power, but otherwise made equal to the predetermined maximum transmission power; and transmitting a signal at the reverse transmission power. The method makes it possible to prevent the transmission power from diverging to the maximum output of a transmitter power amplifier.

WO 2006/010958 A2 discloses a method and system of setting transmitter power levels. Particularly in a Local Network Node transmitter, providing a pico cell for private use. A User Equipment (UE) is used to make measurements of the transmission link properties, such as downlink power and round trip time. Based on the measurements made at one or a plurality of locations, the power of the Local Network Node can be determined such that interference is minimized with any overlying cells of a macro-network. Call handovers between the UE and the cell of a macro network can also be arranged based on properties measure by the UE.

WO 2008/093100 A2 discloses a method of controlling a base station in a cellular wireless communications network, the method comprising, within the base station, autonomously adapting a maximum value for a total transmit power of the base station, such that interference between the station and other access points in the vicinity is minimized.

## SUMMARY OF THE INVENTION

The present invention is directed to a method and a system for controlling uplink and downlink powers, so as to decrease the indoor communication interference to the outdoor communication.

As embodied and broadly described herein, the present invention provides a method for controlling a downlink power, which includes the steps as follows.

A downlink interference control threshold corresponding to an indoor cell is calculated according to downlink signal sample data of adjacent cells of the indoor cell.

A power control judgment is performed on a downlink transmit power of a terminal in the indoor cell according to a power control relevant measured value, and the downlink transmit power of the terminal is adjusted to the downlink interference control threshold if the downlink transmit power from a network side to the terminal is determined to be larger than the downlink interference control threshold according to a power control judgment result, if the downlink transmit power from the network side to the terminal after the power control is determined to be smaller than or equal to the downlink interference control threshold according to the power control judgment result, the downlink transmit power from the network side to the terminal is adjusted according to the power control judgment result.

The present invention provides a method for controlling an uplink power, which includes the steps as follows.

An uplink interference control threshold corresponding to an indoor cell is calculated according to uplink signal sample data of the indoor cell.

An actual uplink transmit power of a terminal reported by the terminal in the indoor cell is received.

A power control judgment is performed on the uplink transmit power of the terminal in the indoor cell according to a power control relevant measured value, and the actual uplink transmit power of the terminal is adjusted to the uplink interference control threshold if the actual uplink transmit power of the terminal after the power control is determined to be larger than the uplink interference control threshold according to a power control judgment result, if the actual uplink transmit power of the terminal after the power control is determined to be smaller than or equal to the uplink interference control threshold according to the power control judgment result, the uplink transmit power of the terminal is adjusted according to the power control judgment result.

The present invention further provides a system for controlling a downlink power, which includes a calculating unit, a power control unit, and a determining unit.

The calculating unit is adapted to calculate a downlink interference control threshold corresponding to an indoor cell according to downlink signal sample data of the adjacent cells of the indoor cell.

The power control unit is adapted to perform a power control judgment and a power adjustment on a downlink transmit power of a terminal in the indoor cell according to a power control relevant measured value.

The determining unit is adapted to determine whether the downlink transmit power from a network side to the terminal after the power control is larger than the downlink interference control threshold or not according to a power control judgment result of the power control unit, and if yes, instruct the power control unit to adjust the downlink transmit power of the terminal to the downlink interference control threshold, the determining unit is further adapted to instruct the power control unit to adjust the downlink transmit power from the network side to the terminal according to the power control judgment result, when determining that the downlink transmit power from the network side to the terminal after the power control is smaller than or equal to the downlink interference control threshold according to the power control judgment result of the power control unit.

The present invention further provides a system for controlling an uplink power, which includes a calculating unit, a power receiving unit, a power control unit, and a determining unit.

The calculating unit is adapted to calculate an uplink interference control threshold corresponding to an indoor cell according to uplink signal sample data of the indoor cell. The power receiving unit is adapted to receive an actual uplink transmit power of a terminal reported by the terminal in the cell.

The power control unit is adapted to perform a power control judgment and a power adjustment on the uplink transmit power of the terminal in the indoor cell according to a power control relevant measured value.

The determining unit is adapted to determine whether the actual uplink transmit power of the terminal after the power control is larger than the uplink interference control threshold or not according to a judgment result of the power control unit and the actual uplink transmit power of the terminal received by the power receiving unit, and if yes, instruct the power control unit to adjust the actual uplink transmit power of the terminal to the uplink interference control threshold, and if the actual uplink transmit power of the terminal after the power control is determined to be smaller than or equal to the uplink interference control threshold according to the power control judgment result, instruct the power control unit to adjust the actual uplink transmit power of the terminal according to the power control judgment result.

As compared with the prior art, the present invention mainly has the advantages as follows. When outdoor adjacent cells exist around the indoor cell, the downlink power received by the terminal in the indoor cell and the uplink transmit power of the terminal may be controlled within a more appropriate scope, so as to decrease the interference of the indoor communication to the outdoor communication. In addition, the calculated uplink and the downlink interference control thresholds are independent for one indoor cell, according to different particular environments, the thresholds corresponding to each indoor cell may be different, so that the power control may be completely adapt to the environment, thereby improving the power control effect to the optimal.

**BRIEF DESCRIPTION OF THE DRAWINGS**

The present invention will become more fully understood from the detailed description given herein below for illustration only, and thus are not limitative of the present invention, and wherein:

FIG. 1 is a schematic view of a power control in the prior art;

FIG. 2 is a schematic view of a signal change under the power control in the prior art;

FIG. 3 is a schematic view of an interference of an indoor cell signal to an outdoor cell signal in the prior art;

FIG. 4 is a schematic view of a principle of a method for controlling a downlink power according to a first embodiment of the present invention;

FIG. 5 is a flow chart of the method for controlling the downlink power according to the first embodiment of the present invention;

FIG. 6 is a schematic view of a relation between an indoor loss, an outdoor loss and a distance in the method for controlling the downlink power according to the first embodiment of the present invention;

FIG. 7 is a schematic view of a principle of a method for controlling an uplink power according to a second embodiment of the present invention;

FIG. 8 is a flow chart of the method for controlling the uplink power according to the second embodiment of the present invention;

FIG. 9 is a structural view of a system for controlling a downlink power according to a third embodiment of the present invention; and

FIG. 10 is a structural view of a system for controlling an uplink power according to a fourth embodiment of the present invention.

**DETAILED DESCRIPTION OF THE EMBODIMENTS**

In order to have a further understanding of the objectives, the technical solutions, and the advantages of the present invention, a detailed description is given below with accompanying drawings.

The present invention relates to a method for controlling a downlink power, applicable to a power control of an indoor cell. Referring to FIG. 4, the method includes the steps as follows.

In Step S401, a detecting terminal in an indoor cell samples data of downlink signals of adjacent cell of the indoor cell, and sends the sample data to a base station of the indoor cell.

In Step S402, the base station calculates a downlink interference control threshold corresponding to the indoor cell according to the downlink signal sample data of the adjacent cell of the indoor cell.

In Step S403, a power control judgment is performed on a downlink transmit power of the terminal in the indoor cell, and the downlink transmit power of the terminal is adjusted to the downlink interference control threshold, if the downlink transmit power from the base station to the terminal is determined to be larger than the downlink interference control threshold according to a power control judgment result.

Therefore, when outdoor cells exist around the indoor cell, the downlink power received by the terminal in the indoor cell is controlled in a more appropriate scope, thereby decreasing the interference of the indoor communication to the outdoor communication. The base station of the indoor cell may be a distributed antenna system control device, a small base station, a repeater, AP, or other devices, and the power control judgment includes, but not limited to, the existing open loop power control judgment, the closed loop power control judgment, the inner loop power control judgment, and the outer loop power control judgment.

In this implementation, Step S401 and Step S402 are referred to as the training of the downlink interference control threshold. The training of the downlink interference control threshold is usually realized before the system starts to provide the normal traffic, for example, when the base station is being debugged after the base station is power on. In addition, a switch may be set in the RNC, so as to control this function. When it is necessary, the switch is turned on to train the downlink interference control threshold, and if the switch is turned off, the downlink interference control threshold training function has no effect.

Firstly, the Step S401 of sampling the data is described as follows. In this part, the detecting terminal samples the data of the downlink signals of the adjacent cell in the indoor cell, and sends the sample data to the base station of the indoor cell. Particularly, the detecting terminal may sample the data near the window, the door, or other positions with relatively larger outdoor cell interference. The sample data includes a received signal code power $P_{RSCP}$ of the adjacent cell, and further includes the Ec/Io of the cell and the adjacent cell.

It is assumed that the indoor cell has n adjacent cells, the data sampled by the detecting terminal is as follows.

The indoor cell: $(P_{RSCP})_{local}$, $(Ec/Io)_{local}$,

The adjacent cell 1: $(P_{RSCP})_1$, $(Ec/Io)_1$

The adjacent cell 2: $(P_{RSCP})_2$, $(Ec/Io)_2$ ........

The adjacent cell n: $(P_{RSCP})_n$, $(Ec/Io)_n$

The detecting terminal sends the sample data to the base station of the indoor cell. It should be mentioned that in this step, the amount of the sample data may be selected according to the actual situation, the data may be sampled as much as possible, or the amount may be appropriately decreased.

After obtaining the sample data, the procedure proceeds to the Step S402, in which the base station calculates the downlink interference control threshold according to the sample data reported by the detecting terminal. Particularly, the base station firstly calculates an average received signal code power, that is,

$$(P_{RSCP})_{AVG} = \frac{1}{n}\{(Prscp)1 + (Prscp)2 + ... + (Prscp)n\}$$

according to the received signal code power of each adjacent cell. Next, an offset value is added to the average received signal code power, so as to obtain the downlink interference control threshold $P_{Thr\_DL}$ corresponding to the indoor cell. The offset value here is usually within a scope from 5 dB to 6 dB. It is assumed that the offset value is 6 dB in this implementation, and $P_{Thr\_DL} = (P_{RSCP})_{AVG}+6$ dB.

The formula has two meanings, when the average received signal code power is larger than the received signal code power of the indoor cell, that is, $(P_{RSCP})_{AVG}>(P_{RSCP})_{local}$, the formula is equivalent to $P_{Thr\_DL}=(P_{RSCP})_{local}+|(P_{RSCP})_{local}- (P_{RSCP})_{AVG}|+6$ dB. That is to say, the received signal code power of the cell is complemented, and is further increased by 6 dB after being complemented to the average received signal code power, so that the transmit power from the base station to the indoor terminal is 6 dB higher than the average received signal code power of the outdoor cell. Here, the indoor interference to the outdoor is relatively small. When the average received signal code power is smaller than the received signal code power of the cell, that is, $(P_{RSCP})_{AVG}< (P_{RSCP})_{local}$, $P_{Thr\_DL}= (P_{RSCP})_{AVG}+6$ dB. That is to say, the downlink transmit power from the base station to the terminal in the indoor cell is directly controlled within the scope of the average received signal code power of the outdoor cell plus 6 dB, so that the indoor interference to the outdoor is relatively small.

The calculated downlink interference control threshold is independent for one indoor cell, and the threshold corresponding to each indoor cell may be different according to different particular environments, so that the power control may be completely adapt to the environment, thereby improving the power control effect to the optimal.

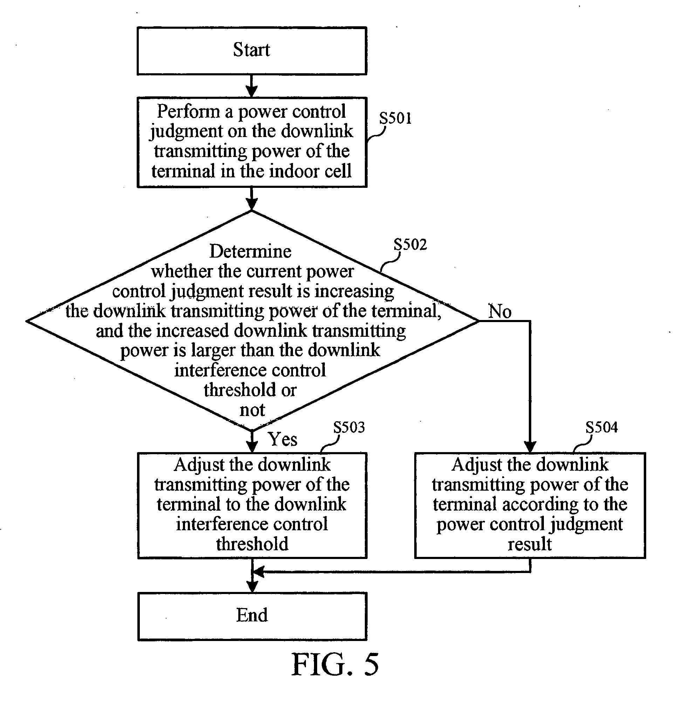

After calculating the downlink interference control threshold, the procedure proceeds to the Step S403, in which the downlink power of the terminal in the indoor cell is controlled according to the threshold, as shown in FIG. 5, and the Step S403 includes the processes as follows.

In Step S501, according to the prior art, the power control judgment, which includes any one of an existing open loop power control judgment, a closed loop power control judgment, an inner loop power control judgment, and an outer loop power control judgment, is performed on the downlink transmit power of the terminal in the indoor cell according to the power control relevant measured value (for example, the SIR and the received power of the terminal etc.).

In Step S502, the current power control judgment result is determined, if the current power control judgment result is increasing the downlink transmit power from the base station to the terminal, and the increased downlink transmit power is larger than the downlink interference control threshold, the procedure proceeds to Step S503. On the contrary, if the current power control judgment result is decreasing the downlink transmit power from the base station to the terminal, or the power control judgment result is increasing the downlink transmit power from the base station to the terminal, but the increased downlink transmit power is smaller than or equal to the downlink interference control threshold, the procedure proceeds to Step S504.

In Step S503, the downlink transmit power from the base station to the terminal is adjusted to the downlink interference control threshold.

In Step S504, the downlink transmit power from the base station to the terminal is adjusted according to the power control judgment result.

The downlink interference control threshold is the average received signal code power plus 6 dB, so that the maximum value of the downlink transmit power from the base station to the terminal of the indoor cell may be only 6 dB larger than the average downlink transmit power (that is, the average received signal code power) received by the terminal in the outdoor cell. It may be known from the simulation result that under the situation, the indoor terminal can finish the communication, and the interference to the outdoor cell is within the scope of being 1 m away from the indoor, so that the indoor cell communication interference to the outdoor cell is decreased to the minimum.

Particularly, several situations exist.

1. When the communication terminal is in the region within the coverage scope of the indoor cell and near the outdoor (for example, the window, the door, and the balcony etc.), and the outdoor signal is relatively good (that is, the terminal in the outdoor cell performs the communication), the downlink transmit power from the base station to the indoor terminal is 6 dB higher than the average downlink transmit power received by the outdoor terminal. Here, it may be ensured that for the indoor terminal, the indoor cell is the leading cell, the communication is not affected, and the difference value of 6 dB may ensure that the signals leaked from the indoor to the outdoor are weak interference signals which do not affect the outdoor cell.

2. When the communication terminal is in the region within the coverage scope of the indoor cell and near the outdoor, and the outdoor signal is quite weak, the maximum downlink transmit power from the base station to the indoor terminal is 6 dB higher than the average downlink transmit power received by the outdoor terminal, so that when the performance of the user of the indoor cell is ensured, the signals leaked to the outdoor are limited. It may be known from the simulation result that the interference is controlled within the scope of being 1 m away from the indoor cell, so that the outdoor cell service scope is not distinctly shrunk.

3. When the communication terminal is in the region with the good coverage condition of the indoor cell, the downlink transmit power is naturally relatively small, the indoor cell may directly control the downlink transmit power according to the existing power control algorithm (that is, the power control judgment result) without forming the interference to the outdoor network.

In the implementation manner, under various scenes, it is ensured that the interference of the indoor communication to the outdoor cell achieves the minimum.

It should be noted that 6 dB is only one particular example, and during particular applications, the scopes of the interference of the indoor cell to the outdoor allowed by different scenes are different, 6 dB may be adjusted to, for example, 5 dB or 7 dB etc.

The effects of the implementation manner are validated through two scenes.

For the first scene, when the outdoor network has the communication signals, the indoor communication interference to the outdoor network is calculated, that is, the interference signals leaked from the downlink are estimated.

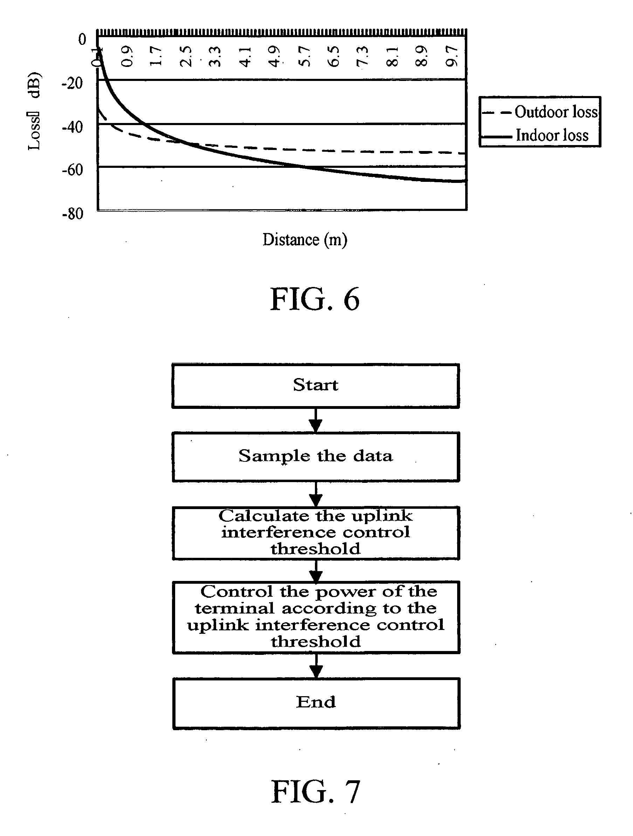

According to the power control algorithm of this embodiment, the leaked interference signals are obtained by subtracting the wall penetrating loss and the loss of the indoor and the outdoor signals on the wave transferring rule from the downlink signals leaked from the indoor cell. The wave transferring rule of the indoor and outdoor signals, that is, the relation between the indoor loss, the outdoor loss, and the distance, is shown in FIG. 6. The particular numerical values of FIG. 6 correspond to Table 1.

Table 1

| R(m) | L(dB, Outdoor) | L(dB, Indoor) |
|------|----------------|---------------|
| 0.1 | -34.21602904 | -7 |
| 1 | -44.21602904 | -37 |
| 2 | -47.226329 | -46.03089987 |
| 3 | -48.98724159 | -51.31363764 |
| 4 | -50.23662895 | -55.06179974 |

(continued)

| R(m) | L(dB, Outdoor) | L(dB, Indoor) |
|------|----------------|---------------|
| 5 | -51.20572908 | -57.96910013 |
| 6 | -51.99754154 | -60.34453751 |
| 7 | -52.66700944 | -62.3529412 |
| 8 | -53.24692891 | -64.09269961 |
| 9 | -53.75845413 | -65.62727528 |
| 10 | -54.21602904 | -67 |

The interference signal leaked from the indoor cell may be described through the formula as follows.

The downlink interference signal=$P_{Thr\_DL}$-$L_{penetrating}$ -$L_{space}$=$P_{Thr\_DL}$-10-$L_{space}$, in which $P_{Thr\_DL}$ is the maximum downlink transmit power from the base station to the indoor terminal, that is, the downlink interference control threshold. 10 dB is the common wall penetrating loss, and $L_{space}$ is the loss of the indoor and the outdoor signals on the wave transferring rule.

According to the formula, the indoor cell communication interference to the outdoor cell being 1 m away from the indoor cell is calculated. It is assumed that the communication terminal in the indoor cell is 2 m away from the indoor antenna (in the boundary region connected to the outdoor), it may be known from Table 1 that on the outdoor position being 1 m away from the outer wall, the loss on the wave transferring rule reaches 44.2 dB, and on the outdoor position being 2 m away from the indoor, the loss on the wave transferring rule reaches 46 dB, and the wall loss is 10 dB. The indoor cell downlink interference control threshold calculated according to the implementation manner is usually 15 dBm, then an antenna radiation efficiency is removed, the indoor cell communication interference signal to the outdoor cell being 1 m away from the indoor cell=15 dB-29 dB(antenna radiation efficiency)-46 dB(indoor loss)-44.2 dB(outdoor loss)-10 dB(wall loss)=-114.2 dB. It may be known that by using this implementation, when the outdoor network has the communication signal, the interference of the indoor cell communication signal to the outdoor network is small.

For the second scene, when the outdoor network does not have the signal, the interference of the indoor communication to the outdoor network is calculated, that is, the interference signals leaked from the downlink are estimated.

Similarly, the indoor cell communication interference to the outdoor cell being 1 m away from the indoor cell is calculated. The downlink interference signal=$P_{Thr\_DL}$-$L_{penetrating}$ in which $P_{Thr\_DL}$ is the maximum downlink transmit power from the base station to the indoor terminal, that is, the downlink interference control threshold in this embodiment, $P_{Thr\_DL}$ =$(P_{RSCP})_{AVG}$+6 dB. Similarly, the wall loss is 10 dB. On the outdoor position being 1 m away from the indoor cell, according to Table 1, the loss on the outdoor wave transferring rule is 44.2 dB. It is assumed that the communication terminal in the indoor cell is 2 m away from the indoor antenna (located in the boundary region neighboring the outdoor), according to Table 1, the loss on the indoor wave transferring rule is 46 dB.

Therefore, it is obtained that the downlink interference signal=$(P_{RSCP})_{AVG}$ +6 dB-46 dB(indoor loss)-44.2 dB(outdoor loss)-10 dB(wall loss)=$(P_{RSCP})_{AVG}$-94.2 dB.

Here, the outdoor does not have the signal coverage, so the average received signal code power of the adjacent cells is 0, that is, $(P_{RSCP})_{AVG}$=0.

It may be known that in the outdoor position being 1 M away from the indoor, the leaked and output interference signal is -94.2 dB, the interference signal is relatively small, and the outdoor does not have the signal coverage, so the effect on the outdoor may be omitted. It may be known that in this embodiment, the interference to the outdoor cell may be controlled within a scope being 1 m away from the indoor.

The losses are different from one another, and when the interference of the indoor base station to the outdoor cell exists, the interference of the outdoor base station to the indoor cell exists as well. However, under a common situation, the distance between the outdoor base station and the indoor cell is larger than 10 m, and in this embodiment, it is ensured that the indoor cell is the leading cell, so that the effect may be omitted.

A second embodiment of the present invention relates to a method for controlling a uplink power, as shown in FIG. 7, and in this embodiment, the method similarly includes the three parts of sampling the data, calculating an uplink interference control threshold, and controlling the uplink power according to the calculated threshold.

In this embodiment, the first part and the second part are referred to as the training of the uplink interference control threshold. The training of the uplink interference control threshold is usually realized before the system starts to provide the normal traffic, for example, when the base station is being debugged after the base station is power on. A switch may be set in the RNC so as to control this function. When it is necessary, the switch is turned on to train the uplink interference control threshold, and if the switch is turned off, the uplink interference control threshold training function has no effect.

Firstly, the first part of sampling the data is described as follows. In this part, the detecting terminal samples the data of the uplink signals of the indoor cell, and sends the sample data to the base station of the indoor cell. Particularly, the detecting terminal may sample the data near the window, the door, or other positions with relatively larger outdoor cell interference. The sample data includes the actual uplink transmit power values of the detecting terminal on different positions of the indoor cell.

It is assumed that the detecting terminal respectively samples n actual uplink transmit power values on m positions as follows.

$$P_{TX\_UE\,(1,\,1)},\ P_{TX\_UE\,(1,\,2)} \cdots\cdots P_{TX\_UE\,(1,\,n)}$$

$$P_{TX\_UE\,(2,\,1)},\ P_{TX\_UE\,(2,\,2)} \cdots\cdots P_{TX\_UE\,(2,\,n)}$$

$$\cdots\cdots$$

$$P_{TX\_UE\,(m,\,1)},\ P_{TX\_UE\,(m,\,2)} \cdots\cdots P_{TX\_UE\,(m,\,n)}$$

The detecting terminal sends the sample data to the base station of the indoor cell.

After obtaining the sample data, the procedure proceeds to the second part, in which the base station calculates the uplink interference control threshold according to the received sample data. Particularly, the base station calculates an average uplink transmit power of the terminal according to at least two actual uplink transmit power values on the at least two positions reported by the detecting terminal, and uses the average uplink transmit power as the uplink interference control threshold corresponding to the cell, that is,

$$P_{Thr\_UL} = \overline{P}_{TX\_UE} = \frac{1}{M \times N} \sum_{1}^{M} \sum_{1}^{N} (P_{TX\_UE}(m,n)).$$

That is to say, the maximum uplink transmit power of the indoor terminal is the indoor average uplink transmit power, the terminal in the indoor cell may keep the normal communication with the base station by using the average uplink transmit power, and here, the interference to the outdoor cell is relatively small, so that the indoor cell interference to the outdoor cell may be omitted while ensuring the normal communication of the terminal in the indoor cell.

The calculated uplink interference control threshold is independent for one indoor cell, and, the threshold corresponding to each indoor cell may be different according to different particular environment, so that the power control may be completely adapt to the environment, thereby improving the power control effect to the optimal.

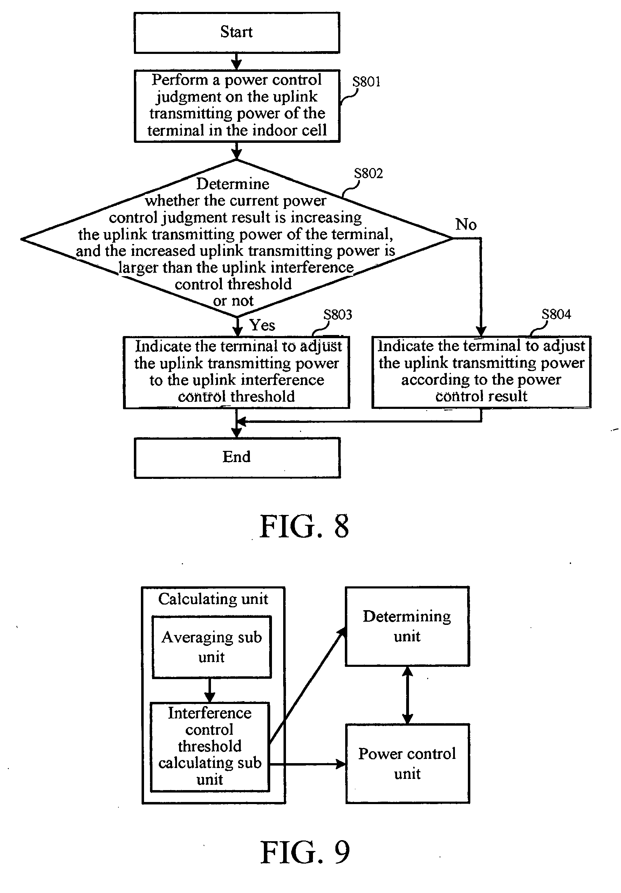

After calculating the uplink interference control threshold, the procedure proceeds to the third part, in which the uplink power of the terminal in the indoor cell is controlled according to the uplink interference control threshold, as shown in FIG. 8.

In Step S801, according to the prior art, the power control judgment, which includes any one of an existing open loop power control judgment, a closed loop power control judgment, an inner loop power control judgment, and an outer loop power control judgment, is performed on the uplink transmit power of the terminal in the indoor cell according to the power control relevant measured value (for example, the SIR and the received power of the terminal etc.).

In Step S802, the current power control judgment result is determined, if the current power control judgment result is increasing the uplink transmit power of the terminal, and the increased uplink transmit power is larger than the uplink interference control threshold, the procedure proceeds to Step 8503. On the contrary, if the current power control judgment result is decreasing the uplink transmit power of the terminal, or the power control judgment result is increasing the uplink transmit power of the terminal, but the increased uplink transmit power is smaller than or equal to the uplink interference control threshold, the procedure proceeds to Step S804.

In Step S803, the terminal is instructed to adjust the uplink transmit power to the uplink interference control threshold. Therefore, under the situation that the outdoor cell exists around the indoor cell and is affected by the indoor cell, the communication power of the terminal in the indoor cell may be controlled within a more appropriate scope, so as to decrease the interference of the indoor communication to the outdoor communication. The terminal in the indoor cell may keep the normal communication with the base station by using the average uplink transmit power, so that the interference to the outdoor cell is decreased without affecting the terminal communication in the cell.

In Step S804, the terminal is instructed to adjust the uplink transmit power according to the power control judgment result.

The effects of this embodiment are validated through an example below.

The signals leaked from the indoor uplink to the outdoor are due to the actual uplink transmit power of the terminal, that is, the leaked uplink interference signals are obtained by subtracting the coupling loss from the uplink transmitting signals of the terminal in the indoor cell. According to the power control algorithm of this embodiment, the maximum transmitting signal of the terminal is PThr_UL, according to the experience, the PThr_UL is usually equal to 7 dB, and under a common situation, the position coupling loss from the outdoor cell to the indoor coverage system is 133 dB, so that the uplink interference signal is estimated as follows.

The uplink interference signal=7 dB-133 dB=-126 dBm

It may be known that the uplink power is controlled through this embodiment, the effect of indoor cell uplink communication signal on the outdoor network is relatively small, and may be omitted.

A third embodiment of the present invention relates to a system for controlling a downlink power, as shown in FIG. 9, the system includes a calculating unit, adapted to calculate a downlink interference control threshold corresponding to an indoor cell according to downlink signal sample data of the adjacent cell of the indoor cell; a power control unit, adapted to perform a power control judgment and a power adjustment on a downlink transmit power of a terminal in the indoor cell; and a determining unit, adapted to determine whether the downlink transmit power from a network side to the terminal after the power control is larger than the downlink interference control threshold or not according to a power control judgment result of the power control unit, and if yes, instruct the power control unit to adjust the downlink transmit power of the terminal to the downlink interference control threshold. Therefore, the downlink power received by the terminal in the indoor cell is controlled within a more appropriate scope, so as to decrease the interference of the indoor communication to the outdoor communication. In addition, the calculated downlink interference control threshold is independent for one indoor cell, and the threshold corresponding to each indoor cell may be different according to different particular environment, so that the power control may be completely adapt to the environment, thereby improving the power control effect to the optimal.

The determining unit is further adapted to instruct the power control unit to adjust the downlink transmit power from the network side to the terminal according to the power control judgment result, when determining that the downlink transmit power from the network side to the terminal after the power control is smaller than or equal to the downlink interference control threshold according to the power control judgment result of the power control unit.

The sample data is sampled on the positions in the indoor cell overlapped with the adjacent cells (that is, the positions in the indoor cell relatively seriously affected by the outdoor adjacent cell), the sample data at least includes a received signal code power of the adjacent cell, and the calculating unit includes an averaging sub unit and an interference control threshold calculating sub unit.

The averaging sub unit is adapted to calculate an average received signal code power according to at least one received signal code power of at least one adjacent cell. The interference control threshold calculating sub unit is adapted to add an offset value to the average received signal code power, so as to obtain the downlink interference control threshold corresponding to the indoor cell. The offset value ranges from 5 dB to 6 dB. As compared with the outdoor average received signal code power, the downlink power from the base station in the indoor cell to the terminal may exceed the offset value, so that even if the outdoor adjacent cell signal is relatively strong, the interference to the indoor cell is quite large, and the user is in the region in the indoor cell which is relatively seriously interfered, it is ensured to normally perform the indoor communication. In addition, no matter the outdoor signal is strong or not, when the user in the indoor cell performs the communication, the downlink power from the base station in the indoor cell to the user maximally may only exceed the offset value (for example, 5 dB or 6 dB) as compared with the outdoor power, so that the downlink power received by the terminal in the indoor cell may be controlled within a more appropriately scope. Thus, the indoor communication interference to the outdoor communication is within the scope near the indoor (for example, 1 m), and the indoor cell communication interference to the outdoor cell is decreased to the minimum.

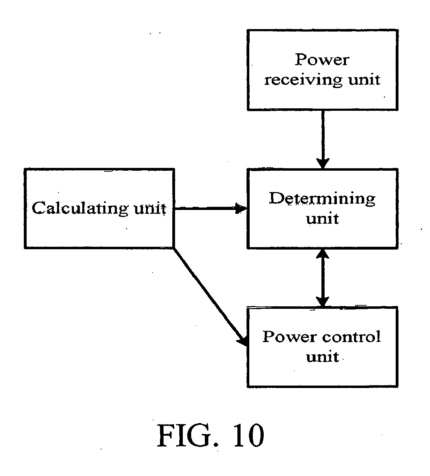

A fourth embodiment of the present invention relates to a system for controlling an uplink power, as shown in FIG. 10, the system includes a calculating unit, adapted to calculate an uplink interference control threshold corresponding to an indoor cell according to uplink signal sample data of the indoor cell; a power receiving unit, adapted to receive an actual uplink transmit power of a terminal reported by the terminal in the cell; a power control unit, adapted to perform a power control judgment and a power adjustment on the uplink transmit power of the terminal in the indoor cell; and a determining unit, adapted to determine whether the actual uplink transmit power of the terminal after the power control is larger than the uplink interference control threshold or not according to a judgment result of the power control unit and the actual uplink transmit power of the terminal received by the power receiving unit, and if yes, instruct the power control unit to adjust the actual uplink transmit power of the terminal to the uplink interference control threshold. Therefore, under the situation that the outdoor adjacent cells exist around the indoor cell, the uplink transmit power of the terminal in the indoor cell is controlled within a more appropriate scope, so as to decrease the interference of the indoor communication to the outdoor communication. In addition, the calculated uplink interference control threshold is independent for one indoor cell, and the threshold corresponding to each indoor cell may be different according to different particular environment, so that the power control may be completely adapt to the environment, thereby improving the power control effect to the optimal.

The sample data is sampled on the positions in the indoor cell overlapped with the adjacent cells (that is, the positions in the indoor cell relatively seriously affected by the outdoor adjacent cell), the sample data at least includes at least two actual uplink transmit power values of the terminal on at least two different positions in the regions, and the calculating unit calculates the uplink interface control threshold in the manner of calculating an average uplink transmit power of the terminal according to the at least two actual uplink transmit power values on the at least two positions, in which the uplink interference control threshold corresponding to the indoor cell is equal to the average uplink transmit power. The terminal in the indoor cell may keep the normal communication with the base station by using the average uplink transmit power, and here, the interference to the outdoor cell is relatively small, so that the indoor cell interference to the outdoor cell may be omitted while ensuring the normal communication of the terminal in the indoor cell.

To sum up, in the present invention, the downlink interference control threshold corresponding to the indoor cell is calculated according to the downlink signal sample data of the adjacent cells of the indoor cell. The power control judgment is performed on the downlink transmit power of the terminal in the indoor cell, if the downlink transmit power from the network side to the terminal is determined to be larger than the downlink interference control threshold according to the power control judgment result, the power adjustment is not performed according to the judgment result, but the downlink transmit power of the terminal is adjusted to the downlink interference control threshold. Therefore, under the situation that the outdoor adjacent cells exist around the indoor cell, the downlink power received by the terminal in the indoor cell is controlled within the more appropriate scope, so as to decrease the indoor communication interference to the outdoor communication. In addition, the calculated uplink interference control threshold is independent for one indoor cell, and the threshold corresponding to each indoor cell may be different according to different particular environment, so that the power control may be completely adapt to the environment, thereby improving the power control effect to the optimal.

The uplink interference control threshold corresponding to the indoor cell is calculated according to uplink signal sample data of the indoor cell. The actual uplink transmit power of the terminal is reported by the terminal in the indoor cell, after the power control judgment is performed on the uplink transmit power of the terminal in the indoor cell, if the actual uplink transmit power of the terminal after the power control is determined to be larger than the uplink interference control threshold according to the power control judgment result, the power adjustment is not performed according to the judgment result, but the actual uplink transmit power of the terminal is adjusted to the uplink interference control threshold. Therefore, under the situation that the outdoor adjacent cells exist around the indoor cell, the uplink transmit power of the terminal in the indoor cell is controlled within the more appropriate scope, so as to decrease the indoor communication interference to the outdoor communication. In addition, the calculated uplink interference control threshold is independent for one indoor cell, and the threshold corresponding to each indoor cell may be different according to different particular environment, so that the power control may be completely adapt to the environment, thereby improving the power control effect to the optimal.

The signal data may be sampled on the positions in the indoor cell seriously interfered by the outdoor signals, so as to ensure the calculated uplink and/or downlink interference control thresholds may be applicable to the terminal in the region with the good signal and the terminal in the region with large signal interference in the indoor cell.

The downlink interference control threshold is equal to the average received signal code power of the at least one received signal code power of each adjacent cell plus an offset value, in which the offset value may be obtained according to the experience or according to the emulation result and may be 6 dB. The downlink power from the base station in the indoor cell to the terminal may exceed the outdoor average received signal code power by the offset value, so that even if the outdoor adjacent cell signal is relatively strong, the interference to the indoor cell is quite large, and the user is in the region in the indoor cell which is relatively seriously interfered, it is ensured to normally perform the indoor communication. In addition, no matter the outdoor signal is strong or not, when the user in the indoor cell performs the communication, the downlink power from the base station to the user maximally may only exceed the outdoor power by the offset value (for example, 5 dB or 6 dB), so that the downlink power received by the terminal in the indoor cell may be controlled within a more appropriately scope. Thus, the indoor communication interference to the outdoor communication is determined to be within the scope near the indoor (for example, 1 m) according to the experience or the emulation, and the indoor cell communication interference to the outdoor cell is decreased to the minimum.

The uplink interference control threshold is equal to the average uplink transmit power of each sample position, that is, the maximum uplink transmit power of the indoor terminal is the indoor average uplink transmit power. The terminal in the indoor cell may keep the normal communication with the base station by using the average uplink transmit power, and here, the interference to the outdoor cell is relatively small, so that the indoor cell interference to the outdoor cell may be omitted while ensuring the normal communication of the terminal in the indoor cell.

Through the description of the above implementation manner, those skilled in the art may clearly know that the present invention may be realized by using software and necessary universal hardware platform, and may be definitely realized by using hardware, but under many situations, the former one is the most preferred implementation manner. On the basis of this understanding, the technical solution of the present invention is essentially realized or the part giving contribution to the prior art is realized in the form of the software product. The software product of the computer is stored in a storage medium, and the software product includes several instructions adapted to enable a computer device (a personal computer, a server, or a network device etc.) to execute the methods according to the embodiments of the present invention.

It will be apparent to those skilled in the art that various modifications and variations can be made to the structure of the present invention without departing from the scope of the invention. In view of the foregoing, it is intended that the present invention cover modifications and variations of this invention provided they fall within the scope of the following claims and their equivalents.

## Claims

1. A method for controlling a downlink power, comprising:

   calculating (S402) a downlink interference control threshold corresponding to an indoor cell according to downlink signal sample data of adjacent cell of the indoor cell; and
   performing (S501) a power control judgment on a downlink transmit power of a terminal in the indoor cell according to a power control relevant measured value, and adjusting (S503) the downlink transmit power of the terminal to the downlink interference control threshold if the downlink transmit power from a network side to the terminal is determined to be larger than the downlink interference control threshold according to a power control judgment result, if the downlink transmit power from the network side to the terminal after the power control is determined to be smaller than or equal to the downlink interference control threshold according to the power control judgment result, the downlink transmit power from the network side to the terminal is adjusted according to the power control judgment result.

2. The method for controlling a downlink power according to claim 1, wherein the sample data is sampled on positions in the indoor cell overlapped with or adjacent to the adjacent cell.

3. The method for controlling a downlink power according to claim 2, wherein the sample data comprises at least one received signal code power of the adjacent cell.

4. The method for controlling a downlink power according to claim 3, wherein the calculating the downlink interference control threshold corresponding to the indoor cell according to the sample data comprises:

   calculating an average received signal code power according to the at least one received signal code power of the adjacent cell; and
   adding an offset value to the average received signal code power, so as to obtain the downlink interference control threshold corresponding to the indoor cell.

5. A method for controlling an uplink power, comprising:

   calculating an uplink interference control threshold corresponding to an indoor cell according to uplink signal sample data of the indoor cell;
   receiving an actual uplink transmit power of a terminal reported by the terminal in the indoor cell; and
   performing (S801) a power control judgment on the uplink transmit power of the terminal in the indoor cell according to a power control relevant measured value, and adjusting (S803) the actual uplink transmit power of the terminal to the uplink interference control threshold if the actual uplink transmit power of the terminal after the power control is determined to be larger than the uplink interference control threshold according to a power control judgment result, if the actual uplink transmit power of the terminal after the power control is determined to be smaller than or equal to the uplink interference control threshold according to the power control judgment result, the uplink transmit power of the terminal is adjusted according to the power control judgment result.

6. The method for controlling an uplink power according to claim 5, wherein the sample data is sampled on positions in the indoor cell overlapped with or adjacent to the adjacent cell.

7. The method for controlling an uplink power according to claim 6, wherein the sample data comprises at least two actual uplink transmit power values of the terminal on at least two different positions in the indoor cell overlapped with the adjacent cell.

8. The method for controlling an uplink power according to claim 7, wherein the calculating the uplink interference control threshold corresponding to the indoor cell according to the sample data comprises:

   calculating an average uplink transmit power of the terminal according to the at least two actual uplink transmit power values on the at least two different positions, and using the average uplink transmit power as the uplink interference control threshold corresponding to the indoor cell.

9. A system for controlling a downlink power, comprising:

   a calculating unit, adapted to calculate a downlink interference control threshold corresponding to an indoor cell according to downlink signal sample data of an adjacent cell of the indoor cell;
   a power control unit, adapted to perform a power control judgment and a power adjustment on a downlink transmit power of a terminal in the indoor cell according to a power control relevant measured value; and
   a determining unit, adapted to determine whether the downlink transmit power from a network side to the terminal after the power control is larger than the downlink interference control threshold or not according to a power control judgment result of the power control unit, and if yes, instruct the power control unit to adjust the downlink transmit power of the terminal to the downlink interference control threshold, the determining unit is further adapted to instruct the power control unit to adjust the downlink transmit power from the network side to the terminal according to the power control judgment result, when determining that the downlink transmit power from the network side to the terminal after the power control is smaller than or equal to the downlink interference control threshold according to the power control judgment result of the power control unit.

10. The system for controlling a downlink power according to claim 9, wherein the sample data is sampled on positions in the indoor cell overlapped with the adjacent cells, the sample data comprises at least one received signal code power of the adjacent cell, and the calculating unit comprises:

    an averaging sub unit, adapted to calculate an average received signal code power according to the at least one received signal code power of the adjacent cell; and
    an interference control threshold calculating sub unit, adapted to add an offset value to the average received signal code power, so as to obtain the downlink interference control threshold corresponding to the indoor cell.

11. A system for controlling an uplink power, comprising:

    a calculating unit, adapted to calculate an uplink interference control threshold corresponding to an indoor cell according to uplink signal sample data of the indoor cell;
    a power receiving unit, adapted to receive an actual uplink transmit power of a terminal reported by the terminal in the cell;
    a power control unit, adapted to perform a power control judgment and a power adjustment on the uplink transmit power of the terminal in the indoor cell according to a power control relevant measured value; and
    a determining unit, adapted to determine whether the actual uplink transmit power of the terminal after the power control is larger than the uplink interference control threshold or not according to a judgment result of the power control unit and the actual uplink transmit power of the terminal received by the power receiving unit, and if yes, instruct the power control unit to adjust the actual uplink transmit power of the terminal to the uplink interference control threshold, and if the actual uplink transmit power of the terminal after the power control is determined to be smaller than or equal to the uplink interference control threshold according to the power control judgment result, instruct the power control unit to adjust the actual uplink transmit power of the terminal according to the power control judgment result.

12. The system for controlling an uplink power according to claim 11, wherein the sample data is sampled on positions in the indoor cell overlapped with the adjacent cell, the sample data comprises at least two actual uplink transmit power values of the terminal on at least two different positions in the indoor cell overlapped with the adjacent cell, and the calculating unit calculates the uplink interference control threshold in the manner of:

    calculating an average uplink transmit power of the terminal according to the at least two actual uplink transmit power values on the at least two positions, wherein the uplink interference control threshold corresponding to the indoor cell is equal to the average uplink transmit power.

**Patentansprüche**

1. Verfahren zum Steuern einer Abwärtsstreckenleistung, das Folgendes umfasst:

   Berechnen (S402) eines Abwärtsstreckeninterferenzsteuerschwellenwerts, der einer Innenraumzelle entspricht, gemäß Abwärtsstreckenabtastdaten einer Nachbarzelle der Innenraumzelle; und
   Ausführen (S501) einer Leistungssteuerungsbeurteilung an einer Abwärtsstreckensendeleistung eines Endgeräts in der Innenraumzelle gemäß einem leistungssteuerungsrelevanten Messwert, und Einstellen (S503) der Abwärtsstreckensendeleistung des Endgeräts auf den Abwärtsstreckeninterferenzsteuerschwellenwert, wenn gemäß einem Leistungssteuerungsbeurteilungsergebnis bestimmt wird, dass die Abwärtsstreckensendeleistung von einer Netzseite zu dem Endgerät größer ist als der Abwärtsstreckeninterferenzsteuerschwellenwert, und wenn gemäß dem Leistungssteuerungsbeurteilungsergebnis bestimmt wird, dass die Abwärtsstreckensendeleistung von der Netzseite zu dem Endgerät nach der Leistungssteuerung kleiner oder gleich dem Abwärtsstreckeninterferenzsteuerschwellenwert ist, wird die Abwärtsstreckensendeleistung von der Netzseite zu dem Endgerät gemäß dem Leistungssteuerungsbeurteilungsergebnis eingestellt.

2. Verfahren zum Steuern einer Abwärtsstreckenleistung nach Anspruch 1, wobei die Abtastdaten an Positionen in der Innenraumzelle abgetastet werden, die mit der Nachbarzelle überlappen oder zu ihr benachbart sind.

3. Verfahren zum Steuern einer Abwärtsstreckenleistung nach Anspruch 2, wobei die Abtastdaten wenigstens eine empfangene Signalcodeleistung der Nachbarzelle umfassen.

4. Verfahren zum Steuern einer Abwärtsstreckenleistung nach Anspruch 3, wobei das Berechnen gemäß den Abtastdaten des Abwärtsstreckeninterferenzsteuerschwellenwerts, der der Innenraumzelle entspricht, Folgendes umfasst:

   Berechnen einer mittleren empfangenen Signalcodeleistung gemäß der wenigstens einen empfangenen Signalcodeleistung der Nachbarzelle; und
   Hinzufügen eines Versatzwertes zu der mittleren empfangenen Signalcodeleistung, um den Abwärtsstreckeninterferenzsteuerschwellenwert, der der Innenraumzelle entspricht, zu erhalten.

5. Verfahren zum Steuern einer Aufwärtsstreckenleistung, das Folgendes umfasst:

   Berechnen eines Aufwärtsstreckeninterferenzsteuerschwellenwerts, der einer Innenraumzelle entspricht, gemäß Aufwärtsstreckensignalabtastdaten der Innenraumzelle; Empfangen einer tatsächlichen Aufwärtsstreckensendeleistung eines Endgeräts, die durch das Endgerät in der Innenraumzelle berichtet wird; und
   Ausführen (S801) einer Leistungssteuerungsbeurteilung an der Aufwärtsstreckensendeleistung des Endgeräts in der Innenraumzelle gemäß einem leistungssteuerungsrelevanten Messwert, und Einstellen (S803) der tatsächlichen Aufwärtsstreckensendeleistung des Endgeräts auf den Aufwärtsstreckeninterferenzsteuerschwellenwert, wenn gemäß einem Leistungssteuerungsbeurteilungsergebnis bestimmt wird, dass die tatsächliche Aufwärtsstreckensendeleistung des Endgeräts nach der Leistungssteuerung größer ist als der Aufwärtsstreckeninterferenzsteuerschwellenwert, und wenn gemäß dem Leistungssteuerungsbeurteilungsergebnis bestimmt wird, dass die tatsächliche Aufwärtsstreckensendeleistung des Endgeräts nach der Leistungssteuerung kleiner oder gleich dem Aufwärtsstreckeninterferenzsteuerschwellenwert ist, wird die Aufwärtsstreckensendeleistung des Endgeräts gemäß dem Leistungssteuerungsbeurteilungsergebnis eingestellt.

6. Verfahren zum Steuern einer Aufwärtsstreckenleistung nach Anspruch 5, wobei die Abtastdaten an Positionen in der Innenraumzelle abgetastet werden, die mit der Nachbarzelle überlappen oder zu ihr benachbart sind.

7. Verfahren zum Steuern einer Aufwärtsstreckenleistung nach Anspruch 6, wobei die Abtastdaten wenigstens zwei tatsächliche Aufwärtsstreckensendeleistungswerte des Endgeräts auf wenigstens zwei unterschiedlichen Positionen in der Innenraumzelle, die mit der Nachbarzelle überlappt sind, umfassen.

8. Verfahren zum Steuern einer Aufwärtsstreckenleistung nach Anspruch 7, wobei das Berechnen gemäß den Abtastdaten des Aufwärtsstreckeninterferenzsteuerschwellenwerts, der der Innenraumzelle entspricht, Folgendes umfasst:

   Berechnen einer mittleren Aufwärtsstreckensendeleistung des Endgeräts gemäß den wenigstens zwei tatsächlichen Aufwärtsstreckensendeleistungswerten auf den wenigstens zwei unterschiedlichen Positionen, und Verwenden der mittleren Aufwärtsstreckensendeleistung als den Aufwärtsstreckeninterferenzsteuerschwellenwert, der der Innenraumzelle entspricht.

9. System zum Steuern einer Abwärtsstreckenleistung, das Folgendes umfasst:

eine Berechnungseinheit, die ausgelegt ist, einen Abwärtsstreckeninterferenzsteuerschwellenwert, der einer Innenraumzelle entspricht, gemäß Abwärtsstreckenabtastdaten einer Nachbarzelle der Innenraumzelle zu berechnen;
eine Leistungssteuerungseinheit, die ausgelegt ist, eine Leistungssteuerungsbeurteilung und eine Leistungseinstellung an einer Abwärtsstreckensendeleistung eines Endgeräts in der Innenraumzelle gemäß einem leistungssteuerungsrelevanten Messwert auszuführen; und
eine Bestimmungseinheit, die ausgelegt ist, gemäß einem Leistungssteuerungsbeurteilungsergebnis der Leistungssteuerungseinheit zu bestimmen, ob die Abwärtsstreckensendeleistung von einer Netzseite zu dem Endgerät nach der Leistungssteuerung größer ist als der Abwärtsstreckeninterferenzsteuerschwellenwert oder nicht, und falls ja, die Leistungssteuerungseinheit anzuweisen, die Abwärtsstreckensendeleistung des Endgeräts auf den Abwärtsstreckeninterferenzsteuerschwellenwert einzustellen, wobei die Bestimmungseinheit ferner ausgelegt ist, die Leistungssteuerungseinheit anzuweisen, die Abwärtsstreckensendeleistung von der Netzseite zu dem Endgerät gemäß dem Leistungssteuerungsbeurteilungsergebnis einzustellen, wenn gemäß dem Leistungssteuerungsbeurteilungsergebnis der Leistungssteuerungseinheit bestimmt wird, dass die Abwärtsstreckensendeleistung von der Netzseite zu dem Endgerät nach der Leistungssteuerung kleiner oder gleich dem Abwärtsstreckeninterferenzsteuerschwellenwert ist.

10. System zum Steuern einer Abwärtsstreckenleistung nach Anspruch 9, wobei die Abtastdaten an Positionen in der Innenraumzelle abgetastet werden, die mit den Nachbarzellen überlappen, wobei die Abtastdaten wenigstens eine empfangene Signalcodeleistung der Nachbarzelle umfassen und wobei die Berechnungseinheit Folgendes umfasst:

eine Mittelungsuntereinheit, die ausgelegt ist, eine mittlere empfangene Signalcodeleistung gemäß der wenigstens einen empfangenen Signalcodeleistung der Nachbarzelle zu berechnen; und
eine Interferenzsteuerschwellenwertberechnungsuntereinheit, die ausgelegt ist, einen Versatzwert zu der mittleren empfangenen Signalcodeleistung hinzuzufügen, um den Abwärtsstreckeninterferenzsteuerschwellenwert zu erhalten, der der Innenraumzelle entspricht.

11. System zum Steuern einer Aufwärtsstreckenleistung, das Folgendes umfasst:

eine Berechnungseinheit, die ausgelegt ist, einen Aufwärtsstreckeninterferenzsteuerschwellenwert, der einer Innenraumzelle entspricht, gemäß Aufwärtsstreckensignalabtastdaten der Innenraumzelle zu berechnen;
eine Leistungsempfangseinheit, die ausgelegt ist, eine tatsächliche Aufwärtsstreckensendeleistung eines Endgeräts, die durch das Endgerät in der Zelle berichtet wird, zu empfangen;
eine Leistungssteuerungseinheit, die ausgelegt ist, eine Leistungssteuerungsbeurteilung und eine Leistungseinstellung an der Aufwärtsstreckensendeleistung des Endgeräts in der Innenraumzelle gemäß einem leistungssteuerungsrelevanten Messwert auszuführen; und
eine Bestimmungseinheit, die ausgelegt ist, gemäß einem Beurteilungsergebnis der Leistungssteuerungseinheit und der tatsächlichen Aufwärtsstreckensendeleistung des Endgeräts, die durch die Leistungsempfangseinheit empfangen wird, zu bestimmen, ob die tatsächliche Aufwärtsstreckensendeleistung des Endgeräts nach der Leistungssteuerung größer ist als der Aufwärtsstreckeninterferenzsteuerschwellenwert oder nicht, und falls ja, die Leistungssteuerungseinheit anzuweisen, die tatsächliche Aufwärtsstreckensendeleistung des Endgeräts auf den Aufwärtsstreckeninterferenzsteuerschwellenwert einzustellen, und falls gemäß dem Leistungssteuerungsbeurteilungsergebnis bestimmt wird, dass die tatsächliche Aufwärtsstreckensendeleistung des Endgeräts nach der Leistungssteuerung kleiner oder gleich dem Aufwärtsstreckeninterferenzsteuerschwellenwert ist, die Leistungssteuerungseinheit anzuweisen, die tatsächliche Aufwärtsstreckensendeleistung des Endgeräts auf das Leistungssteuerungsbeurteilungsergebnis einzustellen.

12. System zum Steuern einer Aufwärtsstreckenleistung nach Anspruch 11, wobei die Abtastdaten an Positionen in der Innenraumzelle, die mit der Nachbarzelle überlappen, abgetastet werden, wobei die Abtastdaten wenigstens zwei tatsächliche Aufwärtsstreckensendeleistungswerte des Endgeräts an wenigstens zwei unterschiedlichen Positionen in der Innenraumzelle, die mit der Nachbarzelle überlappen, umfassen und die Berechnungseinheit den Aufwärtsstreckeninterferenzsteuerschwellenwert auf die folgende Weise berechnet:

Berechnen einer mittleren Aufwärtsstreckensendeleistung des Endgeräts gemäß den wenigstens zwei tatsächlichen Aufwärtsstreckensendeleistungswerten an den wenigstens zwei Positionen, wobei der Aufwärtsstreckeninterferenzsteuerschwellenwert, der der Innenraumzelle entspricht, gleich der mittleren Aufwärtsstreckensendeleistung ist.

## Revendications

1. Procédé pour commander la puissance d'une liaison descendante, comprenant les étapes suivantes :

   calculer (S402) un seuil de commande d'interférence de liaison descendante correspondant à une cellule intérieure conformément à des données d'échantillon de signal de liaison descendante d'une cellule adjacente de la cellule intérieure ; et
   procéder (S501) à un jugement de commande de puissance sur une puissance de transmission de liaison descendante d'un terminal dans la cellule intérieure conformément à une valeur mesurée pertinente de commande de puissance, et ajuster (S503) la puissance de transmission de liaison descendante du terminal au seuil de commande d'interférence de liaison descendante si la puissance de transmission de liaison descendante depuis un côté réseau vers le terminal est déterminée comme étant plus élevée que le seuil de commande d'interférence de liaison descendante conformément à un résultat de jugement de commande de puissance, si la puissance de transmission de liaison descendante depuis le côté réseau vers le terminal après que la commande de puissance a été déterminée comme étant inférieure ou égale au seuil de commande d'interférence de liaison descendante conformément au résultat du jugement de commande de puissance, la puissance de transmission de liaison descendante depuis le côté réseau vers le terminal est ajustée conformément au résultat de jugement de commande de puissance.

2. Procédé pour commander la puissance d'une liaison descendante selon la revendication 1, dans lequel les données d'échantillon sont échantillonnées à des positions dans la cellule intérieure se chevauchant avec la cellule adjacente, ou adjacentes à la cellule adjacente.

3. Procédé pour commander la puissance d'une liaison descendante selon la revendication 2, dans lequel les données d'échantillon comprennent au moins une puissance de code de signal reçue de la cellule adjacente.

4. Procédé pour commander la puissance d'une liaison descendante selon la revendication 3, dans lequel le calcul du seuil de commande d'interférence de liaison descendante correspondant à la cellule intérieure conformément aux données d'échantillon comprend les étapes suivantes :

   calculer une puissance de code de signal reçue moyenne suivant l'au moins une puissance de code de signal reçue de la cellule adjacente ; et
   ajouter une valeur de décalage à la puissance de code de signal reçue moyenne, de manière à obtenir le seuil de commande d'interférence de liaison descendante correspondant à la cellule intérieure.

5. Procédé pour commander une puissance de liaison montante, comprenant les étapes suivantes :

   calculer un seuil de commande d'interférence de liaison montante correspondant à une cellule intérieure conformément à des données d'échantillon de signal de liaison montante de la cellule intérieure ;
   recevoir une puissance de transmission de liaison montante réelle d'un terminal rapportée par le terminal dans la cellule intérieure ; et
   procéder (S801) à un jugement de commande de puissance sur la puissance de transmission de liaison montante du terminal dans la cellule intérieure conformément à une valeur mesurée pertinente de commande de puissance, et ajuster (S803) la puissance de transmission de liaison montante réelle du terminal au seuil de commande d'interférence de liaison montante si la puissance de transmission de liaison montante réelle du terminal après que la commande de puissance a été déterminée comme étant plus élevée que le seuil de commande d'interférence de liaison montante conformément à un résultat de jugement de commande de puissance, si la puissance de transmission de liaison montante réelle du terminal après que la commande de puissance a été déterminée comme étant inférieure ou égale au seuil de commande d'interférence de liaison montante conformément au résultat du jugement de commande de puissance, la puissance de transmission de liaison montante du terminal est ajustée conformément au résultat de jugement de commande de puissance.

**6.** Procédé pour commander la puissance d'une liaison montante selon la revendication 5, dans lequel les données d'échantillon sont échantillonnées à des positions dans la cellule intérieure se chevauchant avec la cellule adjacente, ou adjacentes à la cellule adjacente.

**7.** Procédé pour commander la puissance d'une liaison montante selon la revendication 6, dans lequel les données d'échantillon comprennent au moins deux valeurs de puissance de transmission de liaison montante du terminal sur au moins deux positions différentes dans la cellule intérieure se chevauchant avec la cellule adjacente.

**8.** Procédé pour commander la puissance d'une liaison montante selon la revendication 7, dans lequel le calcul du seuil de commande d'interférence de liaison montante correspondant à la cellule intérieure conformément aux données d'échantillon comprend les étapes suivantes :

calculer une puissance de transmission de liaison montante moyenne du terminal suivant les au moins deux valeurs de puissance de transmission de liaison montante réelles sur les au moins deux positions différentes, et utiliser la puissance de transmission de liaison montante moyenne comme seuil de commande d'interférence de liaison montante correspondant à la cellule intérieure.

**9.** Système pour commander la puissance d'une liaison descendante, comprenant :

une unité de calcul, conçue pour calculer un seuil de commande d'interférence de liaison descendante correspondant à une cellule intérieure conformément à des données d'échantillon de signal de liaison descendante d'une cellule adjacente de la cellule intérieure ;
une unité de commande de puissance, conçue pour procéder à un jugement de commande de puissance et à un ajustement de puissance sur une puissance de transmission de liaison descendante d'un terminal dans la cellule intérieure conformément à une valeur mesurée pertinente de commande de puissance ; et
une unité de détermination, conçue pour déterminer si la puissance de transmission de liaison descendante depuis un côté réseau vers le terminal après la commande de puissance est plus élevée que le seuil de commande d'interférence de liaison descendante, ou non, suivant un résultat de jugement de commande de puissance de l'unité de commande de puissance, et, dans l'affirmative, donner pour instruction à l'unité de commande de puissance d'ajuster la puissance de transmission de liaison descendante du terminal au seuil de commande d'interférence de liaison descendante, l'unité de détermination étant en outre conçue pour donner pour instruction à l'unité de commande de puissance d'ajuster la puissance de transmission de liaison descendante depuis le côté réseau vers le terminal conformément au résultat du jugement de commande de puissance, lorsqu'il a été déterminé que la puissance de transmission de liaison descendante depuis le côté réseau vers le terminal, après la commande de puissance, est inférieure ou égale au seuil de commande d'interférence de liaison descendante conformément au résultat du jugement de commande de puissance de l'unité de commande de puissance.

**10.** Système pour commander la puissance d'une liaison descendante selon la revendication 9, dans lequel les données d'échantillon sont échantillonnées à des positions dans la cellule intérieure se chevauchant avec les cellules adjacentes, les données d'échantillon comprennent au moins une puissance de code de signal reçue de la cellule adjacente, et l'unité de calcul comprend :

une sous-unité de calcul de moyenne, conçue pour calculer une puissance de code de signal reçue moyenne suivant l'au moins une puissance de code de signal reçue de la cellule adjacente ; et
une sous-unité de calcul de seuil de commande d'interférence, conçue pour ajouter une valeur de décalage à la puissance de code de signal reçue moyenne, de manière à obtenir le seuil de commande d'interférence de liaison descendante correspondant à la cellule intérieure.

**11.** Système pour commander la puissance d'une liaison montante, comprenant :

une unité de calcul, conçue pour calculer un seuil de commande d'interférence de liaison montante correspondant à une cellule intérieure conformément à des données d'échantillon de signal de liaison montante de la cellule intérieure ;
une unité de réception de puissance, conçue pour recevoir une puissance de transmission de liaison montante réelle d'un terminal rapportée par le terminal dans la cellule ; une unité de commande de puissance, conçue pour procéder à un jugement de commande de puissance et à un ajustement de puissance sur la puissance de transmission de liaison montante du terminal dans la cellule intérieure conformément à une valeur mesurée pertinente de commande de puissance ; et

une unité de détermination, conçue pour déterminer si la puissance de transmission de liaison montante réelle du terminal après la commande de puissance est plus élevée que le seuil de commande d'interférence de liaison montante, ou non, suivant un résultat de jugement de l'unité de commande de puissance et de la puissance de transmission de liaison montante réelle du terminal reçue par l'unité de réception de puissance, et, dans l'affirmative, donner pour instruction à l'unité de commande de puissance d'ajuster la puissance de transmission de liaison montante réelle du terminal au seuil de commande d'interférence de liaison montante, et si la puissance de transmission de liaison montante réelle du terminal après la commande de puissance est déterminée comme étant inférieure ou égale au seuil de commande d'interférence de liaison montante conformément au résultat du jugement de commande de puissance, donner pour instruction à l'unité de commande de puissance d'ajuster la puissance de transmission de liaison montante réelle du terminal conformément au résultat du jugement de commande de puissance.

12. Système pour commander la puissance d'une liaison montante selon la revendication 11, dans lequel les données d'échantillon sont échantillonnées à des positions dans la cellule intérieure se chevauchant avec la cellule adjacente, les données d'échantillon comprennent au moins deux valeurs de puissance de transmission de liaison montante réelles du terminal sur au moins deux positions différentes dans la cellule intérieure se chevauchant avec la cellule adjacente, et l'unité de calcul calcule le seuil de commande d'interférence de liaison montante en exécutant les étapes suivantes :

calculer une puissance de transmission de liaison montante moyenne du terminal conformément à au moins deux valeurs de puissance de transmission de liaison montante réelles sur les au moins deux positions, où le seuil de commande d'interférence de liaison montante correspondant à la cellule intérieure est égal à la puissance de transmission de liaison montante moyenne.

FIG. 1

FIG. 2

## FIG. 3

## FIG. 4

```
                          ┌─────────────────────────┐
                          │          Start          │
                          └─────────────────────────┘
                                      │
                                      ▼
                          ┌─────────────────────────┐
                          │  Perform a power control │   S501
                          │  judgment on the downlink│
                          │  transmitting power of the│
                          │  terminal in the indoor cell│
                          └─────────────────────────┘
                                      │
                                      ▼
```

Determine whether the current power control judgment result is increasing the downlink transmitting power of the terminal, and the increased downlink transmitting power is larger than the downlink interference control threshold or not — S502

No

Yes — S503

Adjust the downlink transmitting power of the terminal to the downlink interference control threshold

S504

Adjust the downlink transmitting power of the terminal according to the power control judgment result

End

# FIG. 5

FIG. 6

FIG. 7

```
                        ┌─────────────────┐
                        │      Start      │
                        └────────┬────────┘
                                 │
                        ┌────────▼────────┐
                        │ Perform a power control      S801
                        │ judgment on the uplink
                        │ transmitting power of the
                        │ terminal in the indoor cell │
                        └────────┬────────┘
                                 │
                             Determine                  S802
                    whether the current power
                 control judgment result is increasing
              the uplink transmitting power of the terminal,     No
              and the increased uplink transmitting power is
                 larger than the uplink interference
                        control threshold
                            or not
                             Yes    S803                      S804
              ┌──────────────────────────┐   ┌──────────────────────────┐
              │ Indicate the terminal to adjust │ Indicate the terminal to adjust │
              │ the uplink transmitting power   │ the uplink transmitting power   │
              │ to the uplink interference      │ according to the power          │
              │ control threshold               │ control result                  │
              └──────────────┬───────────┘   └──────────────┬───────────┘
                             │                              │
                        ┌────▼──────────────────────────────┘
                        │        End
                        └─────────────────┘
```

# FIG. 8

```
    ┌─────────────────────┐         ┌──────────────────┐
    │ Calculating unit     │         │   Determining    │
    │  ┌────────────────┐  │    ┌───▶│     unit          │
    │  │ Averaging sub  │  │   ╱    └────────┬─────────┘
    │  │     unit       │  │  ╱              ▲
    │  └───────┬────────┘  │ ╱               │
    │          │           │╱                ▼
    │  ┌───────▼────────┐  │        ┌──────────────────┐
    │  │  Interference  │  │        │  Power control   │
    │  │    control     │──┼───────▶│      unit         │
    │  │   threshold    │  │        └──────────────────┘
    │  │ calculating sub│  │
    │  │      unit      │  │
    │  └────────────────┘  │
    └─────────────────────┘
```

# FIG. 9

FIG. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0682418 A2
- WO 2006010958 A2
- WO 2008093100 A2